# EUROPEAN PATENT SPECIFICATION

(11) **EP 3 842 259 B1**
(45) Date of publication and mention of the grant of the patent: **24.04.2024**
(21) Application number: 19862905.7
(22) Date of filing: 03.09.2019
(51) Int. Cl.: B60C 19/00, B60C 5/00

(54) **PNEUMATIC TIRE**
LUFTREIFEN
PNEUMATIQUE

(30) Priority: 19.09.2018 JP 2018174845
(43) Date of publication of application: 30.06.2021
(73) Proprietor: Sumitomo Rubber Industries, Ltd., Kobe-shi, Hyogo 651-0072 (JP)
(72) Inventor: KAWACHI, Takahiro, Kobe-shi, Hyogo 651-0072 (JP)
(74) Representative: Manitz Finsterwald Patent- und Rechtsanwaltspartnerschaft mbB
(86) International application number: PCT/JP2019/034628
(87) International publication number: WO 2020/059482

(56) References cited:
- EP-A1- 1 529 665
- EP-A1- 1 876 038
- WO-A1-2006/117944
- WO-A1-2008/062673
- WO-A1-2015/111315
- WO-A1-2017/163219
- WO-A1-2018/074414
- WO-A1-2018/074414
- WO-A1-2018/123484
- JP-A- 2004 035 784
- JP-A- 2011 526 556
- JP-A- 2015 209 198
- JP-A- 2017 109 701
- US-A1- 2017 008 354

## Description

### Technical Field

The present invention relates to a pneumatic tire provided with a noise damper on an inner cavity surface of the tire.

### Background Art

JP 4960626 B2 proposes a pneumatic tire in which a noise damper made of a porous material is fixed onto a tire inner cavity surface. The noise damper absorbs cavity resonance noise in the tire inner cavity and decreases running noise of the pneumatic tire.

Further pneumatic tires in which a noise damper made of a porous material is fixed onto a tire inner cavity surface are known from EP 1 876 038 A1, WO 2018/123484 A1 and WO 2017/163219 A1.

### Summary of the Invention

### Problems to be Solved by the Invention

However, there is a problem that when the temperature becomes high, the hardness of the noise damper is decreased, and the repeated deformation during running of the tire results in internal fracture, thereby, the sound absorption effect is decreased.

The present invention was made in view of the above, and a primary object thereof is to provide a pneumatic tire capable of maintaining the sound absorption performance of the noise damper by improving durability performance of the noise damper in a high temperature environment.

### Means for Solving the Problem

The pneumatic tire according to the present invention includes a noise damper made of a porous material and fixed to a tire inner cavity surface, wherein in the noise damper, a ratio H1/H2 of a first hardness H1 measured in accordance with Method D of Japanese Industrial Standard JIS K6400-2 in an atmosphere of 23 degrees Celsius and a second hardness H2 measured in accordance with Method D of Japanese Industrial Standard JIS K6400-2 in an atmosphere of 50 degrees Celsius is 2.0 or less.

In the pneumatic tire according to the present invention, it is preferred that the ratio H1/H2 is 1.7 or less.

In the pneumatic tire according to the present invention, it is preferred that the ratio H1/H2 is 1.4 or less.

In the pneumatic tire according to the present invention, it is preferred that the first hardness H1 is 100 N or less.

In the pneumatic tire according to the present invention, it is preferred that the first hardness H1 is 60 N or less.

In the pneumatic tire according to the present invention, it is preferred that the second hardness H2 is 35 N or more.

In the pneumatic tire according to the present invention, it is preferred that the noise damper has an air permeability of 60 cm3/cm2/s or less measured in accordance with Japanese Industrial Standard JIS K6400-7.

In the pneumatic tire according to the present invention, it is preferred that the air permeability of the noise damper is 30 cm3/cm2/s or less.

In the pneumatic tire according to the present invention, it is preferred that the air permeability of the noise damper is 10 cm3/cm2/s or less.

In the pneumatic tire according to the present invention, it is preferred that the noise damper has closed cells and the number of the cells is 55 or less per 25 mm.

In the pneumatic tire according to the present invention, it is preferred that the noise damper has a tensile strength of 160 kPa or less measured in accordance with Japanese Industrial Standard JIS K6400-5 in an atmosphere of 23 degrees Celsius.

In the pneumatic tire according to the present invention, it is preferred that the tensile strength of the noise damper is 130 kPa or less.

In the pneumatic tire according to the present invention, it is preferred that the noise damper has an elongation of 140% or more measured in accordance with Japanese Industrial Standard JIS K6400-5 in an atmosphere of 23 degrees Celsius.

In the pneumatic tire according to the present invention, it is preferred that the elongation of the noise damper is 170% or more.

In the pneumatic tire according to the present invention, it is preferred that the tread portion is formed by a rubber composition containing natural rubber, butadiene rubber, and styrene butadiene rubber.

### Advantageous Effects of the Invention

The pneumatic tire of the present invention has the noise damper fixed to the tire inner cavity surface of the tread portion. The noise damper is made of the porous material and absorbs the cavity resonance noise in the tire inner cavity, therefore, the running noise of the pneumatic tire is decreased.

Further, in the noise damper, the ratio H1/H2 of the first hardness in an atmosphere of 23 degrees Celsius and the second hardness H2 in an atmosphere of 50 degrees Celsius is 2.0 or less. In the noise damper configured as such, sufficient hardness is maintained even in a high temperature environment, therefore, the internal fracture due to repeated deformation caused during running of the tire is suppressed. As a result, the durability performance of the noise damper is improved, thereby, the sound absorption performance of the noise damper can be easily maintained.

### Brief Description of the Drawings

[Figure 1] a cross-sectional view showing an embodiment of a pneumatic tire according to the present invention.
[Figure 2] a cross-sectional view illustrating a state of the tire in which a puncture hole is repaired.
[Figure 3] a cross-sectional view showing another embodiment of the pneumatic tire according to the present invention.

### Description of the Preferred Embodiment

An embodiment of the present invention will now be described in conjunction with accompanying drawings.

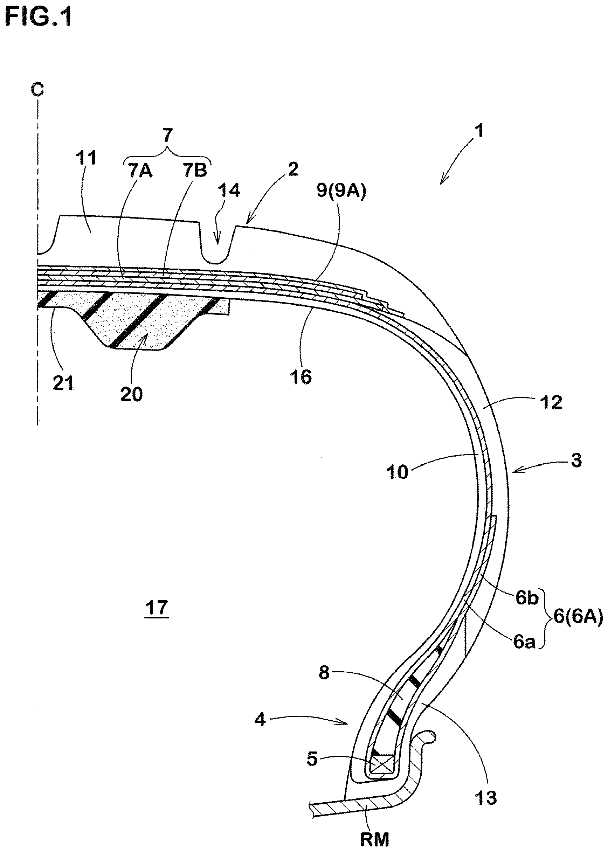

Figure 1 is a tire meridian section passing through a tire rotational axis of a pneumatic tire 1 according to the present embodiment in a standard state (hereinafter, may be simply referred to as "tire 1"). Here, the standard state is a state in which the tire is mounted on a standard rim RM, inflated to a standard inner pressure, and loaded with no tire load. Hereinafter, dimensions and the like of various parts of the tire 1 are those measured under the standard state, unless otherwise noted.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard pressure" is air pressure specified for the concerned tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO. When the tire is for a passenger car, it is set to 200 kPa uniformly in consideration of the actual use frequency and the like.

As shown in Figure 1, the tire 1 of the present embodiment is suitably used as a radial tire for a passenger car, for example. The tire 1 has a carcass 6, a belt layer 7, a band layer 9, an inner liner 10, and a noise damper 20.

The carcass 6 extends between a pair of bead portions 4. The carcass 6 is composed of at least one, one in the present embodiment, carcass ply 6A. The carcass ply 6A includes a main body portion (6a) extending between bead cores 5 of the bead portions 4 via a tread portion 2 and sidewall portions 3, and turned up portions (6b) connected with the main body portion (6a) and each turned up around a respective one of the bead cores 5 from an inside to an outside in a tire axial direction. Between the main body portion (6a) and each of the turned up portions (6b) of the carcass ply 6A, a bead apex rubber 8 which tapers outward in a tire radial direction from a respective one of the bead cores 5 is arranged.

The carcass ply 6A is provided with carcass cords (not shown) arranged at an angle of 80 degrees or more and 90 degrees or less with respect to a tire equator (C), for example. As the carcass cords, organic fiber cords such as aromatic polyamides and rayon are used, for example.

On the outside of the carcass 6, a tread rubber 11 arranged in the tread portion 2, a sidewall rubber 12 forming the outer surfaces of the sidewall portions 3, and a bead rubber 13 forming the outer surfaces of the bead portions 4 are arranged. The outer surface of the tread rubber 11 is provided with grooves 14 recessed radially inward from a ground contacting surface.

The belt layer 7 is arranged inside the tread portion 2 and radially outside the carcass 6. The belt layer 7 of the present embodiment is composed of two belt plies 7A and 7B arranged radially inside and outside. In the belt plies 7A and 7B, belt cords (not shown) are arranged at an angle of 10 degrees or more and 35 degrees or less with respect to a tire circumferential direction, for example. These belt plies 7A and 7B are overlapped so that the belt cords intersect each other. For the belt cords, steel, aramid, rayon or the like can be suitably used, for example.

The band layer 9 is arranged radially outside the belt layer 7. The band layer 9 of the present embodiment includes a band ply 9A in which band cords (not shown) are spirally wound at an angle of 10 degrees or less, preferably 5 degrees or less, with respect to the tire circumferential direction. As the band cords, organic fiber cords such as nylon cords can be used, for example. The band layer 9 is provided as necessary and may be omitted depending on the use and the like of the tire 1.

The inner liner 10 is arranged radially inside the carcass 6. The inner liner 10 forms a tire inner cavity surface 16. The inner liner 10 is made of butyl rubber, which is air impermeable, for example.

The noise damper 20 is made of a porous material having a large number of pores (cells) on its surface. This noise damper 20 is fixed to the tire inner cavity surface 16 of tread portion 2. The noise damper 20 of the present embodiment has an elongated belt-like shape having a bottom surface to be fixed to the inner cavity surface of the tread portion 2 and extends in the tire circumferential direction. Further, the noise damper 20 is formed in a substantially annular shape by having a pair of outer ends (not shown) arranged on both sides in the tire circumferential direction butt against each other. It should be noted that the pair of the outer ends may be spaced apart in the tire circumferential direction.

Examples of the porous material include a porous sponge material, for example. The sponge material is a sponge-like porous structure. Further, the sponge material shall include the so-called sponge itself made of foamed rubber or synthetic resin, as well as animal fibers, plant fibers, synthetic fibers, or the like that are intertwined and connected as one piece, for example.

As the sponge material, synthetic resin sponge such as ether type polyurethane sponge, ester type polyurethane sponge, polyethylene sponge, and rubber sponge such as chloroprene rubber sponge (CR sponge), ethylene propylene rubber sponge (EDPM sponge), nitrile rubber sponge (NBR sponge) can be preferably and suitably used, and in particular, a polyurethane type or polyethylene type sponge including an ether type polyurethane sponge is preferred from the point of view of noise damping property, lightweight property, controllability of foaming, durability, and the like.

The noise damper 20 absorbs air in a tire inner cavity 17 by the pores (cells) located on the surface of and inside the noise damper, and can consume vibration energy by converting the vibration energy of the vibrating air into thermal energy. As a result, the noise damper 20 can decrease the sound (cavity resonance energy) and absorb the cavity resonance noise in the tire cavity (for example, running noise around 250 Hz). Further, the porous material (sponge material, for example) constituting the noise damper 20 is easy to deform such as contraction, flexion, and the like. Therefore, the noise damper 20 can be flexibly deformed by following the deformation of the inner liner 10 during running.

The noise damper 20 of the present embodiment has substantially the same cross-sectional shape at an arbitrary position in the tire circumferential direction except for the outer ends (not shown). In order to prevent collapse and deformation during running, it is preferred that the cross-sectional shape is a flat and horizontally elongated shape in which a height in the tire radial direction is smaller than a width in the tire axial direction. Further, on the radially inner surface of the noise damper 20, a concave groove 21 extending continuously in the circumferential direction is provided. The concave groove 21 increases a surface area of the noise damper 20, therefore, it is possible that more resonance energy is absorbed, and heat dissipation is increased, therefore, it is possible that the temperature rise of the sponge material is suppressed.

The hardness of the above porous material used in the noise damper 20 has a temperature dependency, and the hardness usually decreases as the temperature increases. In the present embodiment, a porous material having a low temperature dependency of hardness is employed so that sufficient hardness can be maintained even when the tire 1 is in a heat-generating state.

That is, in the noise damper 20 of the present embodiment, a ratio H1/H2 of a first hardness H1 in an atmosphere of 23 degrees Celsius and a second hardness H2 in an atmosphere of 50 degrees Celsius is 2.0 or less. Here, the above first hardness H1 and second hardness H2 are measured after the test piece of the porous material is left in the atmosphere at each temperature for 10 minutes, and then the test piece is subjected to 25% constant compression for 20 seconds by using a testing machine (for example, UFT urethane testing machine (UFT-5KN) available from Japan Instrumentation System Co., Led.) in accordance with Method D of "Hardness Testing" in Section 6 of Japanese Industrial Standard JIS K6400-2:2012.

The noise damper 20 configured as such maintains sufficient hardness even when the tire generates heat due to running, therefore, the internal fracture due to repeated deformation during running of the tire 1 is suppressed. As a result, the durability performance of the noise damper 20 in a high temperature environment is improved, thereby, the sound absorption performance of the noise damper 20 can be easily maintained.

As described above, the present invention is characterized by the provision of the noise damper in the tire inner cavity, wherein the noise damper has the ratio H1/H2 of 2.0 or less between the first hardness H1 at an atmosphere of 23 degrees Celsius and the second hardness H2 at an atmosphere of 50 degrees Celsius. Here, the ratio H1/H2 indicates that the hardness of the noise damper is less temperature dependent. Techniques itself for decreasing the temperature dependency of the hardness of the noise damper is well known, and by referring to them, the noise damper according to the present invention can be easily realized.

For example, Japanese Patent No. 5833155 shows that in a polyol composition containing polyester triol, by setting the content of polyester triol to 15% or more and 30% or less by weight based on the weight of the polyol composition and by setting the ester group concentration of the polyol composition to 0.1 mmol/g or more and 5.0 mmol/g or less, a noise damper having a low temperature dependency of the hardness can be realized.

Further, for example, Japanese Unexamined Patent Application Publication No. 2013-119620 shows that the noise damper having low temperature dependency of the hardness can be realized by blending the following polyols in predetermined blending amounts: a polyol having a hydroxyl number of 20 mgKOH/g or more and 28 mgKOH/g or less, molecular weight of 6000 or more and 8500 or less, functional group number of 3, and ethylene oxide content of 10% or more and 25% or less by weight; a polyol having a hydroxyl number of 200 mgKOH/g or more and 280 mgKOH/g or less, molecular weight of 600 or more and 850 or less, functional group number of 2, and ethylene oxide content of 0% by weight; a polyol having hydroxyl number of 50 mgKOH/g or more and 140 mgKOH/g or less, molecular weight of 800 or more and 2200 or less, functional group number of 2, and ethylene oxide content 0% by weight; a polyol having hydroxyl number of 40 mgKOH/g or more and 80 mgKOH/g or less, molecular weight of 2000 or more and 4000 or less, functional group number of 3, and ethylene oxide content of 50% or more and 90% or less by weight; and a polyol having hydroxyl number of 40 mgKOH/g or more and 80 mgKOH/g or less, molecular weight of 2000 or more and 4000 or less, functional group number of 3, and a terminal primary OH content of 100 mole%.

Furthermore, for example, Japanese Patent No. 5258215 shows that the noise damper having low temperature dependency of the hardness can be realized by reacting A) and B), wherein A) Isocyanate prepolymer formed by the reaction product of a high melting point polyisocyanate reacted with a polyol component formed by α-hydro-ω-hydroxypoly (oxytetramethylene) and α-hydro-ω-hydroxypoly (oxypropylene-1,2) and/or α-hydro-ω-hydroxypoly (oxypropylene-1,2-co-oxyethylene); B) a mixture of aliphatic diol, trifunctional polyol, polyol, polyol or water, and at least one chain extender selected from the group of aromatic diamines.

Furthermore, for example, Japanese Unexamined Patent Application Publication No. 2004-300352 shows that the noise damper having low temperature dependency of the hardness can be realized by reacting a polyol component containing monool having an OH equivalent of 5000 or less with an organic polyisocyanate in the presence of a catalyst and a blowing agent.

Furthermore, for example, Japanese Unexamined Patent Application Publication No. 2004-231899 shows that the noise damper having low temperature dependency of the hardness can be realized by reacting a polyol component including a polyoxypropylene (polyoxyethylene) polyol having a base value of 47 mgKOH/g or more and 160 mgKOH/g or less and a terminal oxyethylene unit content of 0% or more and 20% or less by mass, and polyoxypropylene polyoxyethylene polyol having an average number of functional groups of 2 or more and 4 or less, a hydroxyl number of 20 mgKOH/g or more and 40 mgKOH/g or less, and a terminal oxyethylene unit content of 10% or more and 30% or less by mass, with a polyisocyanate containing MDI urethane prepolymer.

Furthermore, for example, Japanese Unexamined Patent Application Publication No. 2004-35784 shows that the noise damper having low temperature dependency of the hardness can be realized by setting the difference in solubility parameter (δ) between two polyols having different molecular weights to 1 or more, and mixing isocyanate-terminated prepolymer, which is obtained by mixing one of the polyols with isocyanate, and the other one of the polyols.

Furthermore, for example, Japanese Patent Publication No. H06-74046 shows that the noise damper having low temperature dependency of the hardness can be realized by modifying a urethane modified product with glycol having an average molecular weight of 1000 or more and 6000 or less, wherein the polyol component of the semi-rigid polyurethane is a polyether polyol, the polyisocyanate component is a mixture of partially modified MDI/polymeric MDI = 9/1 to 6/4 (weight ratio), and as the partially modified MDI, one containing both a carbodiimide modified product and the urethane modified product is used.

From the point of view of improving the durability performance of the noise damper 20 in the above high temperature environment and easily maintaining the sound absorption performance of the noise damper 20, it is preferred that the ratio H1/H2 is 1.7 or less, and it is more preferred that the ratio H1/H2 is 1.4 or less.

It is preferred that the first hardness H1 of the noise damper 20 is 100 N or less. The noise damper 20 configured as such is easily deformed in a temperature range around 23 degrees Celsius, therefore, it is suitable for efficiently absorbing the resonance energy of the vibrating air and converting it into thermal energy to consume it.

From the point of view of efficiently absorbing the resonance energy of the air, the preferred first hardness H1 of the noise damper 20 is 60 N or less.

It is preferred that the second hardness H2 of the noise damper 20 is 35 N or more. In the noise damper 20 configured as such, the hardness can be maintained at a higher level even when the tire is in a heated state due to running, therefore, the durability performance in a high temperature environment of the noise damper 20 is further improved, thereby, the sound absorption performance of the noise damper 20 can be more easily maintained.

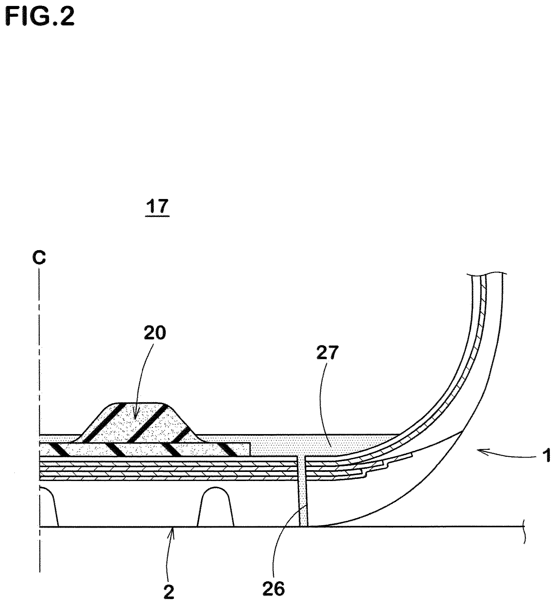

Figure 2 is a cross-sectional view illustrating a state of the tire 1 where a puncture hole 26 formed therein is repaired. For puncture repair of the tire 1 having the noise damper 20, a puncture repair liquid 27 for filling the puncture hole 26 is used, for example. When the puncture repair liquid 27 is injected to the tire inner cavity 17, the puncture hole 26 is filled with the puncture repair liquid 27, therefore, the puncture hole 26 is sealed.

It is preferred that the noise damper 20 of the present embodiment has closed cells (not shown). The noise damper 20 configured as such suppresses infiltration of the puncture repair liquid 27 at the time of the puncture repair, therefore, a small amount of the puncture repair liquid 27 can repair a puncture.

In order to effectively exert such an effect of suppressing infiltration of the puncture repair liquid 27, it is preferred that the number of the closed cells described above is 55 or less per 25 mm. The number of cells is measured according to Annex A of Japanese Industrial Standard JIS K6401-1:2012. In the present embodiment, the number of cells per 25 mm of the test piece (50 × 50 × 3 mm) is visually counted by using a graduated magnifying device (for example, a digital microscope available from Leica) having a magnification that allows recognition of the cells.

It is preferred that an air permeability of the noise damper 20 is 60 cm3/cm2/s or less. Here, the above air permeability is measured according to "Method B" in Section 6 of Japanese Industrial Standard JIS K6400-7:2012, after the test piece is left in an atmosphere of 23 degrees Celsius for 10 minutes. By the noise damper 20 configured as such, the infiltration of the puncture repair liquid 27 mentioned above is suppressed effectively.

From the point of view of suppressing the infiltration of the puncture repair liquid 27 described above, the preferred air permeability of the noise damper 20 is 30 cm3/cm2/s or less, and the more preferred air permeability is 10 cm3/cm2/s or less. It should be noted that the air permeability of the noise damper 20 can be appropriately adjusted by, for example, changing the composition of the raw materials of the porous material, the reaction temperature, and the reaction time.

It is preferred that the noise damper 20 has a tensile strength of 160 kPa or less in an atmosphere of 23 degrees Celsius. Here, the above tensile strength is measured in accordance with "Tensile Strength and Elongation" in Section 5 of Japanese Industrial Standard JIS K6400-5:2012 after the test piece is left in an atmosphere of 23 degrees Celsius for 10 minutes.

If the tensile strength of the noise damper 20 is more than 160 kPa, when a foreign object such as a nail sticks into the region including the noise damper 20 of the tread portion 2, the noise damper 20 may be pulled by the foreign object, therefore, it is possible that the noise damper 20 comes off the inner cavity surface of the tread portion 2.

From the point of view of suppressing the coming off of the noise damper 20 described above, the more preferred tensile strength of the noise damper 20 is 130 kPa or less. It should be noted that the tensile strength of the noise damper 20 can be appropriately adjusted by, for example, changing the composition of the raw materials of the porous material, the reaction temperature, and the reaction time.

It is preferred that the noise damper 20 has an elongation of 140% or more in an atmosphere of 23 degrees Celsius. Here, the elongation mentioned above is measured in accordance with "Tensile Strength and Elongation" in Section 5 of Japanese Industrial Standard JIS K6400-5:2012 after the test piece is left in an atmosphere of 23 degrees Celsius for 10 minutes.

If the elongation of the noise damper 20 is less than 140%, when a foreign object such as a nail sticks into the region, which includes the noise damper 20, of the tread portion 2, the noise damper 20 may be pulled by the foreign object, therefore, the noise damper 20 may come off the inner cavity surface of the tread portion 2.

From the point of view of suppressing the coming off of the noise damper 20, the more preferred elongation of the noise damper 20 is 170% or more.

While detailed description has been made of an especially preferred embodiment of the present invention, the present invention can be embodied in various forms without being limited to the illustrated embodiment.

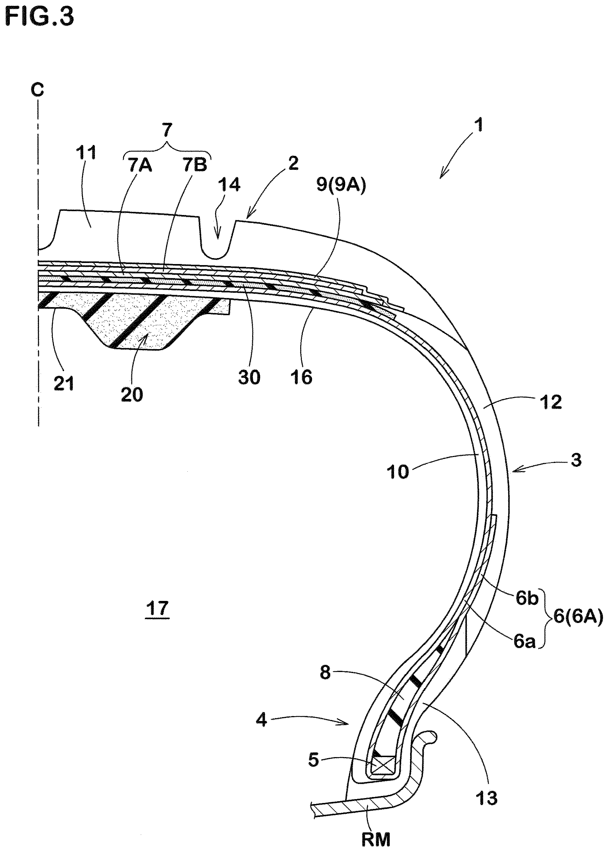

For example, Figure 3 shows a tire 1A as another embodiment of the present invention different from the tire 1 shown in Figure 1. In the tire 1A, a damping rubber body 30 for suppressing vibration is disposed between the carcass 6 and the belt layer 7 inside the tread portion 2. The damping rubber body 30 may be arranged between the belt layer 7 and the band layer 9, or radially outside the band layer 9, for example. For the parts of the tire 1A not described below, the configuration of the tire 1 described above can be adopted.

The damping rubber body 30 is formed of a rubber different from a topping rubber (not shown) included in the carcass ply 6A and the belt ply 7A.

In the present embodiment, a hardness H3 of the damping rubber body 30 is set to be smaller than a hardness H4 of the tread rubber 11 arranged in the tread portion 2. Here, "rubber hardness" is defined as the rubber hardness measured by a type-A durometer in an environment of 23 degrees Celsius in accordance with Japanese Industrial Standard JIS K6253.

The damping rubber body 30 configured as such can suppress the vibration of the tread portion 2, therefore, the running noise (around 160 Hz, for example) can be effectively decreased. Moreover, the tire 1A of the present embodiment can also decrease the running noise around 250 Hz by the noise damper 20, therefore, the noise performance of the tire 1A can be effectively improved. Furthermore, since the damping rubber body 30 of this embodiment is arranged between the carcass 6 and the belt layer 7, the vibration of the carcass 6 and the belt layer 7 is suppressed, therefore, the road noise can be decreased.

In order to effectively exert the above effect, it is preferred that a ratio (H3/H4) of the hardness H3 of the damping rubber body 30 to the hardness H4 of the tread rubber 11 is set to 0.5 or more and less than 1.0. If the ratio (H3/H4) is 1.0 or more, the vibration of the tread portion 2 may not be sufficiently suppressed. On the other hand, if the ratio (H3/H4) is less than 0.5, the rigidity of the damping rubber body 30 becomes small, therefore, the steering stability may not be maintained. From such a point of view, the ratio (H3/H4) is more preferably 0.8 or less, and more preferably 0.6 or more.

### Working Examples

Pneumatic tires of size 165/65R18 having the basic structure shown in Fig. 1 were made by way of test according to the specification listed in Table 1, then the test tires were tested for the noise performance and the durability performance of the noise damper. The specifications common to Examples and References were as follows.
Composition of Tread rubber:
   Natural rubber (TSR20): 15 phr
   SBR1 (terminal modified): 45 phr (bound styrene content: 28%, vinyl group content: 60%, glass transition point: -25 degrees Celsius)
   SBR 2 (terminal modified): 25 phr (bound styrene content: 35%, vinyl group content: 45%, glass transition point: -25 degrees Celsius)
   BR (BR150B): 15 phr
   Silane coupling agent (Si266): 4 phr
   Resin (SYLVARES SA85 available from Arizona Chemical Company): 8 phr
   Oil: 4 phr
   Wax: 1.5 phr
   Age resistor (6C): 3 phr
   Stearic acid: 3 phr
   Zinc oxide: 2 phr
   Vulcanization accelerator (NS): 2 phr
   Vulcanization accelerator (DPG): 2 phr
   Carbon black (N220): 5 phr
   Silica (VN3, 1115MP): 70 phr
   Sulfur: 2 phr
Hardness of tread rubber of the vulcanized tire: 64 degrees
Maximum thickness of tread rubber: 10 mm

The test methods were as follows.

### < Noise Performance >

Each of the test tires was mounted on a rim of 18 x 7JJ, installed on all wheels of a vehicle (domestic 2500cc rear-wheel drive vehicle), and inflated to an inner pressure of 320 kPa. The total sound pressure (decibels) at frequencies of 100 to 200 Hz and 200 to 300 Hz was measured by using a sound collecting microphone attached to the center portion of the backrest of the driver's seat while the above vehicle was driven on a road for measuring road noise (rough asphalt surface road) at a speed of 60 km/h. The results are indicated by an index based on Reference 1 being 100, wherein the larger the numerical value, the smaller the running noise is, which is better.

### < Durability Performance >

Each of the test tires in References 2 to 4 and Examples was mounted on a rim of 18 x 7JJ, and the condition of the noise damper was visually observed by the operator after 250 hours of running at a speed of 80 km/h by using a drum testing machine under the condition of the inner pressure of 320 kPa and the tire load of 4.8 kN. The results are indicated by an evaluation point based on the Reference 3 being 100, wherein the larger the numerical value, the smaller the progress of the internal fracture of the noise damper is, which shows better durability performance under a high temperature environment.

**Table 1 (1/2)**

| | | Ref.1 | Ref.2 | Ref.3 | Ref.4 | Ex.1 | Ex.2 |
|---|---|---|---|---|---|---|---|
| Presence or Absence of Noise damper | | absence | presence | presence | presence | presence | presence |
| First hardness H1 | [N] | --- | 50 | 50 | 40 | 90 | 60 |
| Second hardness H2 | [N] | --- | 23 | 20 | 16 | 64 | 33 |
| Ratio H1/H2 | | --- | 2.2 | 2.5 | 2.5 | 1.4 | 1.8 |
| Noise performance | [index] | 100 | 110 | 110 | 110 | 105 | 110 |
| Durability performance | [evaluation point] | --- | 105 | 100 | 80 | 140 | 115 |

**Table 1 (2/2)**

| | | Ex.3 | Ex.4 | Ex.5 | Ex.6 | Ex.7 |
|---|---|---|---|---|---|---|
| Presence or Absence of Noise damper | | presence | presence | presence | presence | presence |
| First hardness H1 | [N] | 50 | 50 | 50 | 100 | 120 |
| Second hardness H2 | [N] | 28 | 36 | 25 | 71 | 67 |
| Ratio H1/H2 | | 1.8 | 1.4 | 2.0 | 1.4 | 1.8 |
| Noise performance | [index] | 110 | 110 | 110 | 105 | 103 |
| Durability performance | [evaluation point] | 110 | 120 | 110 | 140 | 140 |

From the test results, it was confirmed that the tires in the Examples had improved noise performance compared to the tires in the Reference 1. Further, it was confirmed that the tires in the Examples had better durability performance compared to the tires in the References 2 to 4.

Further, as shown in Figure 2, pneumatic tires in Examples 8 to 12 were made by way of test, and the test tires were tested for the noise performance, the durability performance of the noise damper, and easiness of puncture repair. The test methods for the noise performance and the durability performance of the noise damper were the same as above, and the test method for the easiness of puncture repair was as follows.

### < Easiness of Puncture Repair >

Each of the test tires was mounted on a rim of 18 × 7JJ and inflated to the inner pressure of 320 kPa, and then punctured by rolling on a nail, repaired with the puncture repair liquid (for IMS (Instant Mobility System) available from Sumitomo Rubber Industries, Ltd.), and the amount of the puncture repair liquid used was measured. The results are indicated by an index based on the Example 9 being 100, wherein the larger the numerical value, the smaller the used amount of the puncture repair liquid is, which shows easier puncture repair.

**Table 2**

| | | Ex.8 | Ex.9 | Ex.10 | Ex. 11 | Ex. 12 |
|---|---|---|---|---|---|---|
| Presence or Absence of Noise damper | | presence | presence | presence | presence | presence |
| First hardness H1 | [N] | 60 | 60 | 60 | 60 | 60 |
| Second hardness H2 | [N] | 33 | 33 | 33 | 33 | 33 |
| Ratio H1/H2 | | 1.8 | 1.8 | 1.8 | 1.8 | 1.8 |
| Air permeability | [cm3/cm2/s] | 70 | 60 | 30 | 10 | 8 |
| Noise performance | [index] | 110 | 110 | 110 | 110 | 110 |
| Durability performance | [evaluation point] | 120 | 120 | 120 | 120 | 120 |
| Easiness of Puncture repair | [index] | 90 | 100 | 110 | 120 | 125 |

Furthermore, as shown in Figure 3, pneumatic tires in Examples 13 to 20 were made by way of test, and the test tires were tested for the noise performance, the durability performance of the noise damper, and separation resistance performance of the noise damper when nail sticks. The test methods for the noise performance and the durability performance of the noise damper were the same as above, and the test method for the separation resistance performance of the noise damper when nail sticks was as follows.

### < Separation Resistance Performance of Noise Damper when Nail sticks >

Each of the test tires was mounted on a rim of 18×7JJ and punctured by rolling on a nail, then the damaged part was disassembled to measure the area of separation of the noise damper from the inner cavity surface of the tread portion due to the noise damper being pulled by the nail. The results are indicated by an evaluation point based on the Example 15 being 100, wherein the larger the numerical value, the higher the separation resistance performance is, which is better.

**Table 3 (1/2)**

| | | Ex. 13 | Ex.14 | Ex.15 | Ex.16 |
|---|---|---|---|---|---|
| Presence or Absence of Noise damper | | presence | presence | presence | presence |
| First hardness H1 | [N] | 60 | 60 | 60 | 60 |
| Second hardness H2 | [N] | 33 | 33 | 33 | 33 |
| Ratio H1/H2 | | 1.8 | 1.8 | 1.8 | 1.8 |
| Tensile strength | [kPa] | 180 | 160 | 130 | 120 |
| Noise performance | [index] | 110 | 110 | 110 | 110 |
| Durability performance | [evaluation point] | 120 | 120 | 120 | 120 |
| Separation resistance performance | [evaluation point] | 80 | 90 | 100 | 110 |

**Table 3 (2/2)**

| | | Ex. 17 | Ex. 18 | Ex. 19 | Ex.20 |
|---|---|---|---|---|---|
| Presence or Absence of Noise damper | | presence | presence | presence | presence |
| First hardness H1 | [N] | 60 | 60 | 60 | 60 |
| Second hardness H2 | [N] | 33 | 33 | 33 | 33 |
| Ratio H1/H2 | | 1.8 | 1.8 | 1.8 | 1.8 |
| Elongation | [%] | 130 | 140 | 170 | 200 |
| Noise performance | [index] | 110 | 110 | 110 | 110 |
| Durability performance | [evaluation point] | 120 | 120 | 120 | 120 |
| Separation resistance performance | [evaluation point] | 90 | 95 | 100 | 110 |

Furthermore, as shown in Figure 4, pneumatic tires in Reference 5 and Examples 21 to 23 were made by way of test, and the test tires were tested for the noise performance, the durability performance of the noise damper. The test methods for the noise performance and the durability performance of the noise damper were the same as above.

**Table 4**

| | | Ref.5 | Ex.21 | Ex.22 | Ex.23 |
|---|---|---|---|---|---|
| Presence or Absence of Noise damper | | presence | presence | presence | presence |
| First hardness H1 | [N] | 50 | 50 | 50 | 50 |
| Second hardness H2 | [N] | 24 | 29 | 33 | 35 |
| Ratio H1/H2 | | 2.1 | 1.7 | 1.5 | 1.4 |
| Noise performance | [index] | 110 | 110 | 110 | 110 |
| Durability performance | [evaluation point] | 105 | 130 | 125 | 120 |

### Description of the Reference Signs

- 1: pneumatic tire
- 2: tread portion
- 16: tire inner cavity surface
- 20: noise damper

## Claims

1. A pneumatic tire (1) comprising a noise damper (20) made of a porous material and fixed to a tire inner cavity surface (16),
**characterized in that**, in the noise damper (20), a ratio H1/H2 of a first hardness H1 measured in accordance with Method D of Japanese Industrial Standard JIS K6400-2 in an atmosphere of 23 degrees Celsius and a second hardness H2 measured in accordance with Method D of Japanese Industrial Standard JIS K6400-2 in an atmosphere of 50 degrees Celsius is 2.0 or less.

2. The pneumatic tire (1) according to claim 1, wherein the ratio H1/H2 is 1.7 or less.

3. The pneumatic tire (1) according to claim 2, wherein the ratio H1/H2 is 1.4 or less.

4. The pneumatic tire (1) according to any one of claims 1 to 3, wherein the first hardness H1 is 100 N or less.

5. The pneumatic tire (1) according to claim 4, wherein the first hardness H1 is 60 N or less.

6. The pneumatic tire (1) according to any one of claims 1 to 5, wherein the second hardness H2 is 35 N or more.

7. The pneumatic tire (1) according to any one of claims 1 to 6, wherein the noise damper (20) has an air permeability of 60 cm3/cm2/s or less measured in accordance with Japanese Industrial Standard JIS K6400-7.

8. The pneumatic tire (1) according to claim 7, wherein the air permeability of the noise damper (20) is 30 cm3/cm2/s or less.

9. The pneumatic tire (1) according to claim 8, wherein the air permeability of the noise damper (20) is 10 cm3/cm2/s or less.

10. The pneumatic tire (1) according to any one of claims 1 to 9, wherein
the noise damper (20) has closed cells, and
the number of the cells is 55 or less per 25 mm.

11. The pneumatic tire (1) according to any one of claims 1 to 10, wherein the noise damper (20) has a tensile strength of 160 kPa or less measured in accordance with Japanese Industrial Standard JIS K6400-5 in an atmosphere of 23 degrees Celsius.

12. The pneumatic tire (1) according to claim 11, wherein the tensile strength of the noise damper (20) is 130 kPa or less.

13. The pneumatic tire (1) according to any one of claims 1 to 12, wherein the noise damper (20) has an elongation of 140% or more measured in accordance with Japanese Industrial Standard JIS K6400-5 in an atmosphere of 23 degrees Celsius.

14. The pneumatic tire (1) according to claim 13, wherein the elongation of the noise damper (20) is 170% or more.

15. The pneumatic tire (1) according to any one of claims 1 to 14, wherein the tread portion (2) is formed by a rubber composition containing natural rubber, butadiene rubber, and styrene butadiene rubber.

## Patentansprüche

1. Luftreifen (1), umfassend einen Geräuschdämpfer (20), der aus einem porösen Material hergestellt und an einer Reifeninnenhohlraumfläche (16) befestigt ist,
**dadurch gekennzeichnet, dass** in dem Geräuschdämpfer (20) ein Verhältnis H1/H2 einer ersten Härte H1, die gemäß Verfahren D der japanischen Industrienorm JIS K6400-2 in einer Atmosphäre von 23 Grad Celsius gemessen wird, und einer zweiten Härte H2, die gemäß Verfahren D der japanischen Industrienorm JIS K6400-2 in einer Atmosphäre von 50 Grad Celsius gemessen wird, 2,0 oder weniger beträgt.

2. Luftreifen (1) nach Anspruch 1, wobei das Verhältnis H1/H2 1,7 oder weniger beträgt.

3. Luftreifen (1) nach Anspruch 2, wobei das Verhältnis H1/H2 1,4 oder weniger beträgt.

4. Luftreifen (1) nach einem der Ansprüche 1 bis 3, wobei die erste Härte H1 100 N oder weniger beträgt.

5. Luftreifen (1) nach Anspruch 4, wobei die erste Härte H1 60 N oder weniger beträgt.

6. Luftreifen (1) nach einem der Ansprüche 1 bis 5, wobei die zweite Härte H2 35 N oder mehr beträgt.

7. Luftreifen (1) nach einem der Ansprüche 1 bis 6, wobei der Geräuschdämpfer (20) eine Luftdurchlässigkeit von 60 cm3/cm2/s oder weniger, gemessen gemäß der japanischen Industrienorm JIS K6400-7, aufweist.

8. Luftreifen (1) nach Anspruch 7, wobei die Luftdurchlässigkeit des Geräuschdämpfers (20) 30 cm3/cm2/s oder weniger beträgt.

9. Luftreifen (1) nach Anspruch 8, wobei die Luftdurchlässigkeit des Geräuschdämpfers (20) 10 cm3/cm2/s oder weniger beträgt.

10. Luftreifen (1) nach einem der Ansprüche 1 bis 9, wobei
der Geräuschdämpfer (20) geschlossene Zellen aufweist und
die Anzahl der Zellen 55 oder weniger pro 25 mm beträgt.

11. Luftreifen (1) nach einem der Ansprüche 1 bis 10, wobei der Geräuschdämpfer (20) eine Zugfestigkeit von 160 kPa oder weniger, gemessen gemäß der japanischen Industrienorm JIS K6400-5 in einer Atmosphäre von 23 Grad Celsius, aufweist.

12. Luftreifen (1) nach Anspruch 11, wobei die Zugfestigkeit des Geräuschdämpfers (20) 130 kPa oder weniger beträgt.

13. Luftreifen (1) nach einem der Ansprüche 1 bis 12, wobei der Geräuschdämpfer (20) eine Dehnung von 140 % oder mehr, gemessen gemäß der japanischen Industrienorm JIS K6400-5 in einer Atmosphäre von 23 Grad Celsius, aufweist.

14. Luftreifen (1) nach Anspruch 13, wobei die Dehnung des Geräuschdämpfers (20) 170 % oder mehr beträgt.

15. Luftreifen (1) nach einem der Ansprüche 1 bis 14, wobei der Laufflächenabschnitt (2) durch eine Kautschukzusammensetzung gebildet ist, die Naturkautschuk, Butadienkautschuk und Styrolbutadienkautschuk enthält.

## Revendications

1. Bandage pneumatique (1) comprenant un amortisseur de bruit (20) fait à partir d'un matériau poreux et fixé sur une surface de cavité intérieure du pneumatique (16),
**caractérisé en ce que**, dans l'amortisseur de bruit (20), un rapport H1/H2 d'une première dureté H1 mesurée selon le procédé D de la norme industrielle japonaise JIS K6400-2 dans une atmosphère de 23 degrés Celsius et une seconde dureté H2 mesurée selon le procédé D de la norme industrielle japonaise JIS K6400-2 dans une atmosphère de 50 degrés Celsius est de 2,0 ou moins.

2. Bandage pneumatique (1) selon la revendication 1, dans lequel le rapport H1/H2 est de 1,7 ou moins.

3. Bandage pneumatique (1) selon la revendication 2, dans lequel le rapport H1/H2 est de 1,4 ou moins.

4. Bandage pneumatique (1) selon l'une quelconque des revendications 1 à 3, dans lequel la première dureté H1 est de 100 N ou moins.

5. Bandage pneumatique (1) selon la revendication 4, dans lequel la première dureté H1 est de 60 N ou moins.

6. Bandage pneumatique (1) selon l'une quelconque des revendications 1 à 5, dans lequel la seconde dureté H2 est de 35 N ou plus.

7. Bandage pneumatique (1) selon l'une quelconque des revendications 1 à 6, dans lequel l'amortisseur de bruit (20) a une perméabilité à l'air de 60 cm³/cm²/s ou moins mesurée conformément à la norme industrielle japonaise JIS K6400-7.

8. Bandage pneumatique (1) selon la revendication 7, dans lequel la perméabilité à l'air de l'amortisseur de bruit (20) est de 30 cm³/cm²/s ou moins.

9. Bandage pneumatique (1) selon la revendication 8, dans lequel la perméabilité à l'air de l'amortisseur de bruit (20) est de 10 cm³/cm²/s ou moins.

10. Bandage pneumatique (1) selon l'une quelconque des revendications 1 à 9, dans lequel
l'amortisseur de bruit (20) a des cellules fermées, et
le nombre de cellules est de 55 ou moins par 25 mm.

11. Bandage pneumatique (1) selon l'une quelconque des revendications 1 à 10, dans lequel l'amortisseur de bruit (20) a une résistance à la traction de 160 kPa ou moins mesurée conformément à la norme industrielle japonaise JIS K6400-5 dans une atmosphère de 23 degrés Celsius.

12. Bandage pneumatique (1) selon la revendication 11, dans lequel la résistance à la traction de l'amortisseur de bruit (20) est de 130 kPa ou moins.

13. Bandage pneumatique (1) selon l'une quelconque des revendications 1 à 12, dans lequel de l'amortisseur de bruit (20) a un allongement de 140 % ou plus ou mesuré conformément à la norme industrielle japonaise JIS K6400-5 dans une atmosphère de 23 degrés Celsius.

14. Bandage pneumatique (1) selon la revendication 13, dans lequel allongement de l'amortisseur de bruit (20) est de 170 % ou plus.

15. Bandage pneumatique (1) selon l'une quelconque des revendications 1 à 14, dans lequel la portion formant bande de roulement (2) est formée par une composition de caoutchouc contenant du caoutchouc naturel, du caoutchouc butadiène et du caoutchouc styrène butadiène.
